# FASCICULE DE BREVET EUROPEEN

(11) **EP 1 683 768 B1**
(45) Date de publication et mention de la délivrance du brevet: **19.07.2017**
(21) Numéro de dépôt: 05292690.4
(22) Date de dépôt: 14.12.2005
(51) Int. Cl.: C04B 28/02

(54) **Compositon cimentaire renfermant un agent de blocage du retrait et son utilisation notamment pour la fabrication de chapes liquides**
Zementzusammensetzung enthaltend ein Antischrumpfmittel und seine Verwendung für die Herstellung von flüssigen Estrichen
Cement composition comprising an anti-shrinkage additive and its use in the production of liquid flooring compositions

(30) Priorité: 27.12.2004 FR 0413939
(43) Date de publication de la demande: 26.07.2006
(73) Titulaire: CIMENTS FRANCAIS, F-92800 Puteaux (FR)
(72) Inventeur: Soth, Ratana, 77420 Champs sur marne (FR); Feylessoufi, Abdi, 75016 Paris (FR); Cassar, Luigi, 20097 San Donato Milanese (IT)
(74) Mandataire: Laget, Jean-Loup

(56) Documents cités:
- EP-A1- 0 607 389
- EP-A2- 0 269 015
- WO-A-99/15475
- US-A- 5 378 279
- US-A1- 2002 121 230
- US-A1- 2003 127 026
- CHEMICAL ABSTRACTS, vol. 107, no. 4, 27 July 1987 (1987-07-27), Columbus, Ohio, US; abstract no.: 107: 27555z, Motohashi, Kenichi, et al.: "Packing of mortar into gap in concrete joining", page 266, XP000061585

## Description

La présente invention concerne des compositions cimentaires refermant un agent de blocage du retrait, et leur utilisation notamment pour la fabrication de chapes liquides, en particulier autonivelantes.

Les chapes fluides (ou liquides) sont formées à partir de composition cimentaire à base de liant, très souvent d'un agrégat, qui est généralement du sable, et d'au moins un adjuvant, qui est un fluidifiant (appelé également superplastifiant), qui transforme le mélange en une pâte dont la consistance est proche après gâchage de celle de l'eau. Ceci explique le caractère autonivelant et autolissant de la composition. De telles chapes sont très appréciées dans les domaines de la construction et du bâtiment de par leur aspect (un véritable miroir) et leur aptitude à "rattraper" des niveaux inégaux à se placer dans les ferraillages, et à enrober des canalisations de chauffage par le sol, sans application de vibrations externes généralement en usage dans les techniques de constructions actuelles.

Ces compositions sont également appréciées pour leur facilité de mise en oeuvre, car il est possible de pomper le béton frais à des hauteurs de plusieurs centaines de mètres, ce qui évite la manutention des différents constituants à proximité immédiate de l'application, et éliminer les opérations de vibration en optimisant ainsi les coûts et l'organisation du chantier.

Cependant, cette propriété de fluidité du béton autonivelant doit être obtenue sans provoquer de problèmes de ressuage, ni de sédimentation des agrégats. A cet effet, on utilise, en combinaison avec les agents fluidifiants ou superplastifiants, des agents épaississants minéraux ou organiques, qui permettent de maîtriser la rhéologie de la composition.

Ces agents épaississants peuvent être des épaississants agissant par exclusion stérique, augmentant la viscosité, telles que des macromolécules, notamment les dérivés cellulosiques comme les éthers de cellulose, ou des hydrocolloïdes d'origine végétale comme les polysaccharides incluant les gommes xanthane, guar, caroube, ou encore des polymères de synthèse tels que les poly(oxyde d'éthylène), les polyacrylates réticulés, ou les alcools polyvinyliques. Ils ont pour avantages d'augmenter la viscosité de la composition cimentaire en agissant par encombrement stérique ou par gélification.

D'autres agents de type minéral telle que la silice colloïdale sont parfois utilisés.

L'hydratation du ciment par l'eau produit des composés dont la composition chimique et la nature physique varient. La formation de ces hydrates induit des variations dimensionnelles en termes de gonflement et de contraction (retrait).

Le retrait endogène est principalement dû au fait que le volume occupé par les hydrates formés est inférieur à la somme des volumes occupés par les constituants initiaux (ciment et eau). Ce retrait peut être important et est à l'origine de la création de fissures dans les ouvrages en béton de grandes dimensions.

Dans le domaine des bétons autonivelants, un des problèmes à résoudre est en particulier le phénomène de "curling", c'est-à-dire un relèvement des bords de la chape (gauchissement), lié notamment au différentiel de retrait entre le fond et la surface de la chape.

Le document US 2003/0127026 décrit une composition cimentaire, à résistance à court terme, pouvant renfermer un agent de réduction du retrait. US 2002/0121230 décrit une composition de ciment qui limite le phénomène de "curling" des chapes autonivelantes en comprenant un fluidifiant et la combinaison d'un agent épaississant gélifiant.

Selon US 537829, la solution apportée pour ne pas obtenir de retrait est de combiner un agent plastifiant à 0,5 - 4 % et une faible teneur en agent d'expansion destiné à contrebalancer le retrait prévisible du produit ciment + agrégats.

Le document WO 99/15475 décrit une composition de liants pompable qui est stabilisée par ajouts de stabilisants tels que des biopolymères, en particulier la gomme de xanthane et/ou de welan. Les stabilisants évitent la sédimentation des constituants du liant et les fissures dues au retrait lors du séchage.

Le document EP 0607389 n'aborde nullement la question du retrait dans les mortiers ou bétons mentionnés.

Enfin, la composition décrite dans EP 0269015 ne renferme pas de superplastifiant et n'aborde pas non plus le problème du retrait.

Lors d'une récente étude sur les différents agents épaississants et viscosants, il a été découvert, de manière surprenante, que la combinaison d'un agent minéral tel que la silice colloïdale, et d'un agent organique tel qu'un polysaccharide dans des proportions particulières permettait de conférer à la composition cimentaire des propriétés inattendues, à savoir un blocage du retrait.

Plus particulièrement, la composition cimentaire selon la présente invention renferme du ciment, un superplastifiant et est caractérisée en ce qu'elle renferme un agent de blocage du retrait constitué de l'association de silice amorphe à une concentration minimale de 0,35 % en poids et d'au moins un polysaccharide à une concentration comprise entre 0,012 % et 0,050 % en poids d'extrait sec par rapport au ciment.

Alors qu'en présence de silice amorphe seule dans les mêmes proportions, ou en présence de polysaccharide seul dans les mêmes proportions, on constate une augmentation progressive du retrait lors de l'hydratation, la combinaison de silice et de polysaccharide dans les proportions minimales indiquées ci-dessus conduit à un blocage brutal du retrait, durant ou après la prise du ciment.

De manière avantageuse, la concentration en silice est comprise entre 0,4 et 1 % environ en poids, de préférence entre 0,4 et 0,8 % environ en poids par rapport au ciment.

La silice utilisée dans les compositions cimentaires selon la présente invention peut être une silice naturelle ou synthétique.

Les silices amorphes synthétiques préférées sont celles préparées par les procédés en phase liquide, et sont utilisées sous la forme finale de poudre ou de suspension colloïdale.

La forme de poudre est obtenue après séchage d'un gel de silice (milieu acide) ou de silice précipitée (milieu alcalin) et agglomération des particules de silice (appelées xérogel ou aérogel selon la température de séchage). Dans ce cas, la silice présente un diamètre moyen des particules inférieur à 100 micromètres et une surface spécifique (B.E.T. à l'azote) comprise entre environ 50 et environ 1100 m²/g.

La silice amorphe sous forme de suspension colloïdale possède une granulométrie de l'ordre du nanomètre.

La silice amorphe naturelle peut présenter une surface spécifique (B.E.T.) en particulier supérieure à 3 m²/g.

La concentration en polysaccharide est de préférence comprise entre 0,015 et 0,025 % en poids d'extrait sec par rapport au ciment.

Le polysaccharide peut être choisi parmi les celluloses modifiées, l'amidon modifié ou non, les gommes, le caroube, les alginates, et plus particulièrement choisi parmi le succinoglycane, la gomme guar, la gomme arabique, la gomme xanthane, la gomme welan, la gomme rhamsan, la gomme gellane, ou la carboxymëthylcellulose. Ce polysaccharide peut être introduit sous forme d'une poudre ou d'une émulsion ou suspension dans l'eau ou l'huile.

Le rapport eau/ciment peut être quelconque. Il peut être avantageusement compris dans la gamme allant de 0,25 à 0,7 environ.

La présente invention concerne également un béton ou un mortier renfermant des granulats et la composition cimentaire décrite ci-dessus.

Ces bétons, mortiers et compositions cimentaires sont particulièrement appréciés pour la fabrication de chapes liquides (ou fluides), notamment autonivelantes et en particulier de grandes dimensions. Les bétons à haute résistance sont également compris dans la présente invention.

La composition de ciment peut aussi contenir des fibres telles que par exemple fibres métalliques, polymères, de verre ou de carbone.

La présente invention concerne aussi un procédé de blocage de retrait d'une composition cimentaire, d'un mortier ou d'un bétonrenfermant du ciment et un superplastifiant, caractérisé en ce qu'il consiste à ajouter au moment du gâchage de la silice amorphe à une concentration minimale de 0,35 % en poids et d'au moins un polysaccharide à une concentration comprise entre 0,012 % et 0,050 % en poids d'extrait sec par rapport au ciment, permettant d'interrompre la variation de volume de la composition cimentaire durant et après la prise du ciment. De manière avantageuse, la concentration en silice est comprise entre 0,4 et 1 % environ en poids, de préférence entre 0,4 et 0,8 % environ en poids par rapport au ciment, et la concentration en polysaccharide est comprise entre 0,015 et 0,025 % environ en poids d'extrait sec par rapport au ciment.

Enfin l'invention concerne un agent de blocage du retrait pour composition cimentaire, béton ou mortier, caractérisé en ce qu'il renferme de la silice amorphe et au moins un polysaccharide.

L'agent de blocage du retrait ne doit pas être confondu avec un agent anti-retrait, qui réduit l'amplitude du retrait tout au long de l'hydratation. Ici l'agent de blocage du retrait interrompt brutalement la variation de volume de la composition aux alentours de 20 à 40 h, c'est-à-dire au moment de la "prise", ou du pic d'élévation de température provoquée par l'hydratation du ciment.

Ce phénomène va être mis en évidence plus en détail et illustré à l'aide des exemples qui suivent, en référence aux figures annexées dans lesquelles :
- La figure 1: montre l'évolution du retrait endogène en fonction du temps d'hydratation de compositions renfermant différentes proportions en silice amorphe et en polysaccharide ;
- La figure 2: présente des courbes de la puissance dissipée en fonction du temps d'hydratation pour les mêmes compositions que celles de la figure 1 ;
- La figure 3: montre l'évolution du retrait en fonction du temps d'hydratation de compositions renfermant soit de la silice seule, soit un polysaccharide seul ;
- La figure 4: montre l'évolution du retrait en fonction du temps d'hydratation pour des compositions renfermant une concentration fixe en polysaccharide et des concentrations variables en silice d'une composition selon l'invention ;
- La figure 5: présente le comportement de deux autres polysaccharides dans des compositions selon l'invention ;
- La figure 6: présente des comparaisons entre des compositions selon l'invention renfermant des ciments d'origines différentes ;
- La figure 7: est un graphique montrant l'évolution de la température d'un béton selon l'invention, et sa déformation en fonction du temps d'hydratatïon ;
- Les figures 8 et 9: sont des schémas illustrant les dispositifs de mesure du retrait, respectivement sur les compositions cimentaires, et sur les bétons selon l'invention.

### Exemples 1-7 :

Les compositions cimentaires décrites dans les exemples ci-après mettent en oeuvre les constituants suivants :
- Ciment Portland ("Beaucaire") CEM I 52,5N, de composition présentée dans le tableau 1 ci-après

**Tableau 1**

| **Ciment "Beaucaire" CEM I 52,5N** | |
|---|---|
| **Constituants** | **Proportions (%)** |
| C₃S | 67,3 |
| C₂S | 8,7 |
| C₃A | 3,3 |
| C₄AF | 12,3 |
| Gypse | 3 |

- Superplastifiant Cimfluid 2002 (commercialisé par la Société AXIM) sous forme d'une solution aqueuse à 35 % en extrait sec, comprenant un poly(oxyde d'éthylène) et un copolymère de méthacrylate de sodium et de métacrylate de poly(oxyde d'éthylène)
- Collaxim L2 (commercialisé par la Société AXIM) qui est une suspension aqueuse de silice colloïdale amorphe (à 22 % en extrait sec) nanométrique
- Collaxim L4 (commercialisé par la Société AXIM) qui est une suspension de polysaccharide (succinoglycane) dans de l'huile (à 5 % en extrait sec).

Dans l'ensemble des exemples selon l'invention et des exemples comparatifs décrits ci-après, la proportion Eau/ciment mise en oeuvre est de E/C = 0,45 et celle en superplastifiant (extrait sec)/ciment de 0,52 %.

Toutes les concentrations des adjuvants sont données en pourcentages pondéraux, et sont, sauf indication contraire, calculées par rapport à l'extrait sec de ces adjuvants.

La composition cimentaire est additionnée d'eau, ce qui marque le début du processus d'hydratation, puis soumise immédiatement à un mélange vigoureux de 30s à 65 tours/min, suivi de 90s à 120 tours/min. La pâte obtenue est divisée en divers échantillons pour des mesures de retrait et de calorimétrie.

### Méthodes de mesure du retrait :

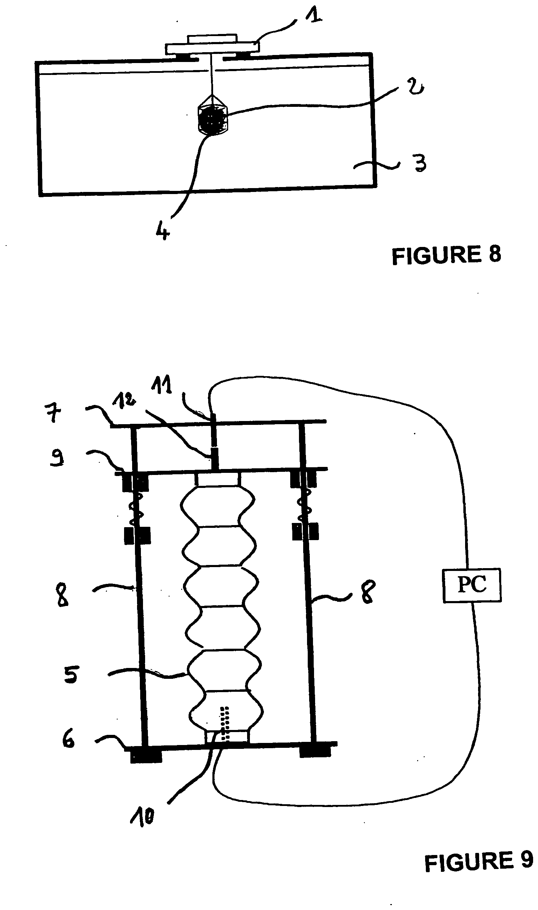

Le dispositif utilisé pour la mesure du retrait des compositions cimentaires est présenté à la figure 8.

Le retrait endogène de ces compositions est obtenu par mesure, au moyen d'une balance 1, de la poussée d'Archimède Pa exercée sur l'échantillon 2 placé dans une baudruche 4 et relié à la balance, le tout étant plongé dans un bain 3 d'eau thermorégulé à 20° C.

La poussée d'Archimède est donnée par l'équation Pa = p.V.g

La variation de la poussée d'Archimède Pa dépend de la variation du volume V (gonflement ou contraction) du corps plongé dans le bain, et est perçue par la balance (précision 1 mg). La masse mesurée par la balance permet de suivre l'évolution ΔV/Vo (variation du volume V de l'échantillon par rapport à son volume initial Vo) au cours du temps, ce qui pemet de tracer les courbes- ΔV/Vo = f(t), afin de suivre l'évolution du retrait endogène,

Pour les compositions de béton, le dispositif utilisé pour les mesures du retrait endogène est schématisé à la figure 9.

Ce dispositif est formé d'un cadre constitué d'un socle horizontal 6 et d'une platine supérieure horizontale 7 entre lesquels sont prévus des montants verticaux 8. A l'intérieur de ce cadre est disposé verticalement un soufflet 5, non déformable radialement, fixé d'une part à sa base au socle vertical 6 et d'autre part, à son extrémité supérieure à un plateau horizontal 9 mobile le long desdits montants verticaux 8.

Le soufflet est rempli de béton au temps to. Divers capteurs reliés à un ordinateur (PC) sont montés sur le dispositif de la figure 9. Un thermocouple 10 introduit dans le soufflet S, à sa base, permet de suivre l'évolution de la température au sein du béton (et donc de repérer le pic correspondant à la prise du béton), et un capteur de déplacement 11 fixé à la platine supérieure 7, à proximité d'un plot 12 fixé au plateau 9, qui est solidaire du soufflet 5, permet de mesurer la contraction (retrait) du béton en fonction du temps.

L'ensemble du dispositif ci-dessus peut être placé dans un bain thermostaté.

Les différentes compositions cimentaires testées sont rassemblées dans le tableau 1 ci-après.

**Tableau 2**

| Exemple | Ciment | Eau | Superplastifiant | Silice | Polysaccharide | |
|---|---|---|---|---|---|---|
| | | | | | Solution | Extrait sec |
| Référence | 100 | 45 | 0,52 | 0 | 0 | 0 |
| Ex 1 comparatif | 100 | 45 | 0,52 | 0,22 | 0,10 | 0,005 |
| Ex 2 comparatif | 100 | 45 | 0,52 | 0,44 | 0,20 | 0,010 |
| Ex 3 | 100 | 45 | 0,52 | 0,66 | 0,30 | 0,015 |
| Ex 4 | 100 | 45 | 0,52 | 0,44 | 0,30 | 0,015 |
| Ex 5 | 100 | 45 | 0,52 | 0,77 | 0,30 | 0,015 |
| Ex 6 comparatif | 100 | 45 | 0,52 | 0 | 0,30 | 0,015 |
| Ex 7 comparatif | 100 | 45 | 0,52 | 0,66 | 0 | 0 |

Toutes les quantités sont exprimées en poids.

### Exemples 1 et 2 (comparatifs) :

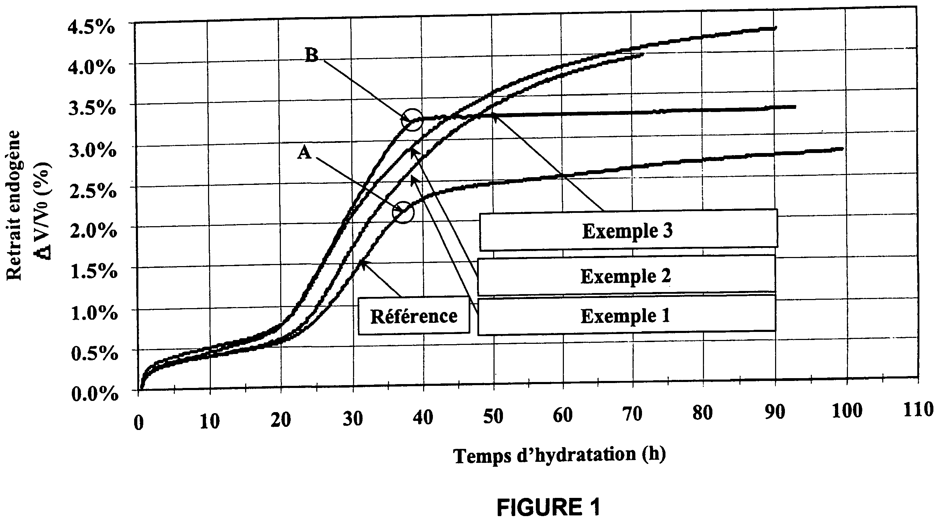

Les courbes de la figure 1 montrent les variations concernant le retrait endogène du ciment en fonction du temps d'hydratation (en heures) pour différentes concentrations en silice amorphe et en polysaccharide.

Pour la composition Référence, c'est-à-dire sans ajout de polysaccharide ni de silice, on note qu'après le point A (correspondant à l'hydratation) le retrait endogène augmente encore notablement d'au moins 0,7 à 0,8 % pendant les 50 heures suivantes par rapport au retrait constaté à 40 h.

De même pour les compositions renfermant une teneur en :
silice 0,22 % + polysaccharide 0,10 % (Ex 1)
et silice 0,44 % + polysaccharide 0,20 % (Ex 2),
on observe que le retrait augmente considérablement après les 40 h :
à savoir entre 2,8 et 4,2 % pour Ex 1 (soit + 1,4 % environ)
et entre 3 et 4,3 % pour Ex 2 (soit + 1,3 % environ).

### Exemple 3 :

De façon surprenante, avec des concentrations augmentées en silice et en polysaccharide (tout en maintenant une proportion relative constante de ces deux adjuvants, proportion identique à celle de Ex 1 et Ex 2) à savoir silice 0,66 % et polysaccharide 0,30 %, la composition cimentaire Ex 3 présente un arrêt total de la progression du retrait endogène. En effet celui-ci ne dépasse pas 0,1 % de variation sur les 50 h suivantes. Le retrait est donc bloqué.

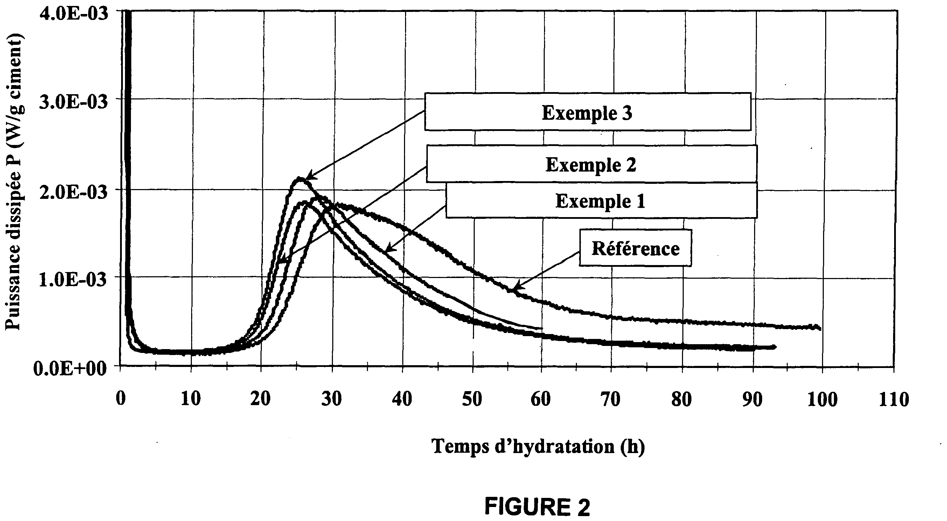

La figure 2 présente pour ces mêmes quatre compositions Référence à Ex 1, Ex 2 et Ex 3, la puissance dissipée en fonction du temps (correspondant à la dérivée de la chaleur totale dissipée en fonction du temps), permettant de noter la période de "prise" des diverses compositions cimentaires (pic formé entre 25 et 30 heures). On ne note pas de différence notable, si ce n'est une accélération de la prise pour les compositions Ex 2 et Ex 3 présentant des teneurs les plus élevées en silice et en polysaccharide.

Des tests de mesure de la résistance mécanique à la compression, réalisés sur des éprouvettes de ciment de 1x1x4 cm³ conservées dans l'eau à 20°C montrent que le blocage du retrait n'a pas d'influence négative sur les propriétés de résistance mécanique (voir tableau 3).

**Tableau 3**

| Composition | Résistance à la compression (MPa) | |
|---|---|---|
| | à 7 jours | à 28 jours |
| Ex 2 | 65 | 89 |
| Ex 3 | 74 | 100 |

Au contraire, la résistance à la compression est même améliorée avec les concentrations en silice et polysaccharide selon l'invention (Ex 3).

### Exemples 4 et 5 :

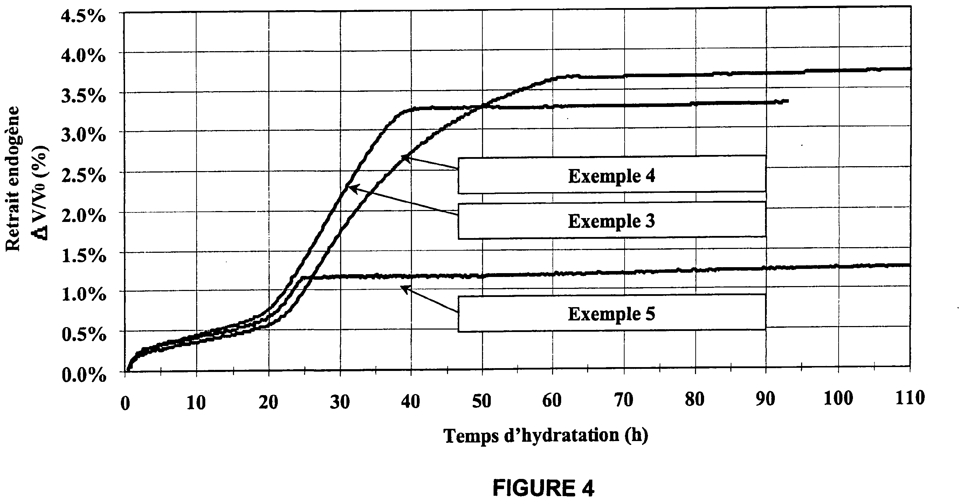

Dans ces exemples, ont été testées différentes compositions à concentration en polysaccharide constante (égale à 0,30 %) et à concentrations variables en silice amorphe (0,44 % pour Ex 4 et 0,77 % pour Ex 5). Les résultats montrant la variation du retrait en fonction du temps sont regroupés sur la figure 4.

A nouveau un blocage du retrait est constaté (retrait inférieur à 0,1 % sur 50 à 80 h). Ce blocage intervient d'autant plus tôt que la concentration en silice est élevée.

Le retrait endogène est en outre fortement réduit à la concentration en silice de 0,77 % (composition Ex 5).

### Exemples 6 et 7 (comparatifs) :

Dans ces exemples, ont été testés des compositions ne renfermant qu'un seul agent de viscosité, soit la silice amorphe à 0,66 % (composition Ex 7) soit le même polysaccharide que dans l'exemple 3, à 0,30 % (composition Ex 6).

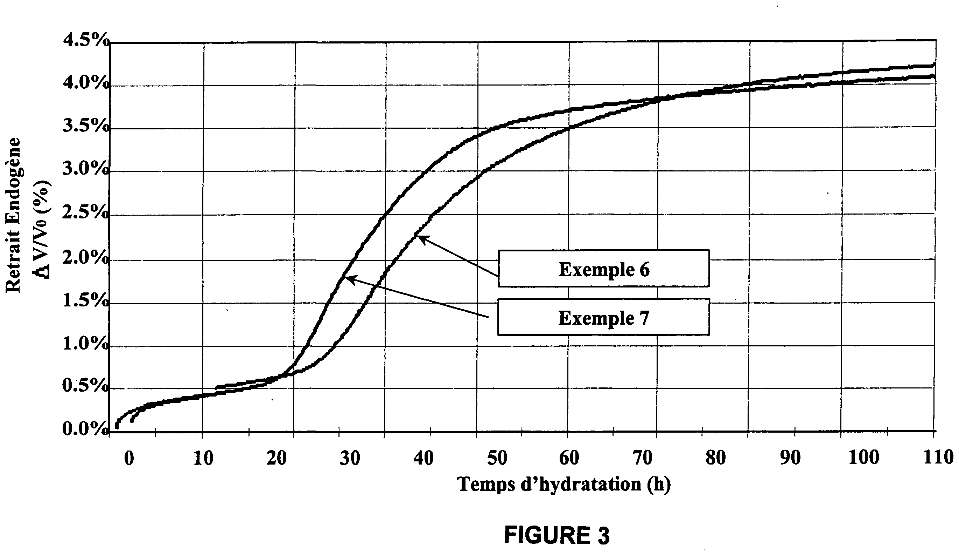

Les résultats présentés sur la figure 3 montrent un retrait endogène très important, croissant au cours du temps, qui atteint 4 % et n'est pas encore stabilisé après 110 heures. Aucune de ces compositions ne présente donc de blocage du retrait, aux concentrations en silice, ou en polysaccharide, identiques à celles de la composition Ex 3.

### Exemple 8:

Dans cet exemple ont été mis en oeuvre des polysaccharides de différentes natures, à des concentrations identiques (% pondéral de 0,015 % d'extrait sec par rapport au ciment, E/C = 0,45 et superplastifiant Cimfluid 2002 à 1,5 % soit 0,52 % en extrait sec, en présence de 0,66 % de silice).

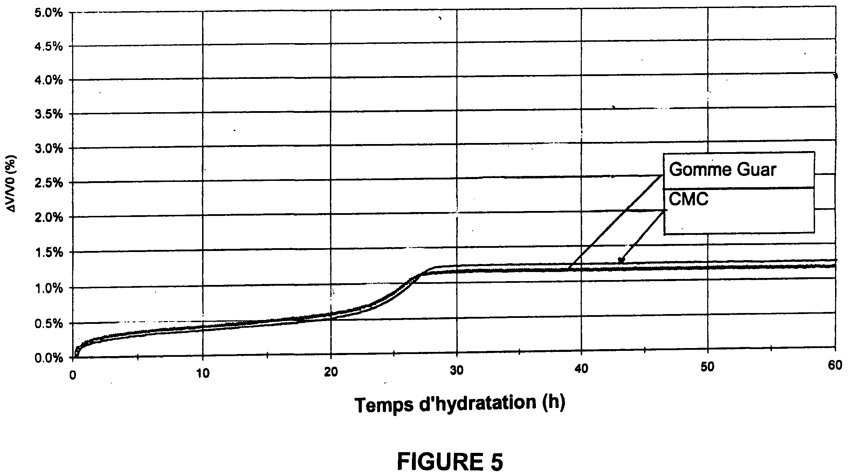

Les polysaccharides suivants ont été testés : Gomme guar et CMC. Les résultats sont présentés sur la figure 5.

On observe à nouveau un blocage brutal du retrait entre 26 et 28 heures d'hydratation, comme avec le succinoglycane utilisé dans les exemples précédents 1 à 7.

### Exemple 9 :

La nature du ciment a également été testée, dans cet exemple, à savoir :
- le ciment B Portland 52,5N présentant une surface spécifique Blaine de 3990 cm²/g
- le ciment R Portland 52,5N présentant une surface spécifique Blaine de 4435 cm²/g
- le ciment G₁ à 52,5N
- le ciment G₂ à 42,5N
Ce sont tous des ciments Portland.

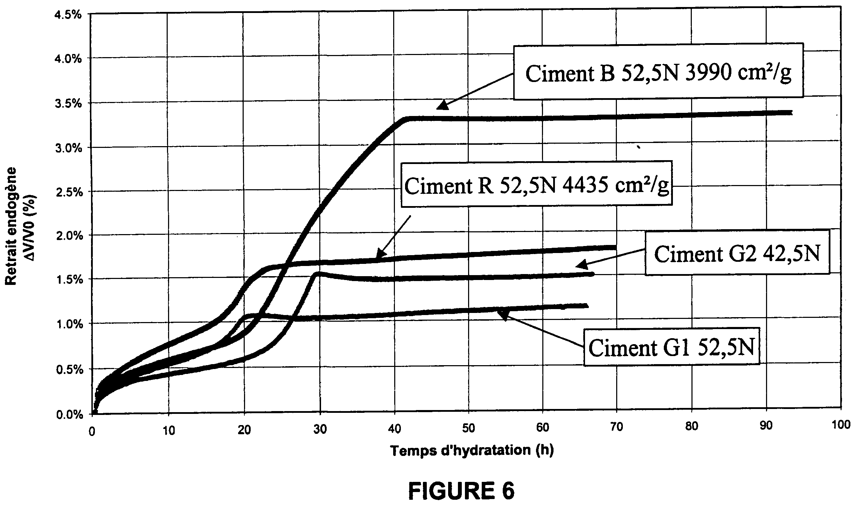

Les résultats sont rassemblés sur les courbes de la figure 6.

Le blocage du retrait a lieu ici entre 25 et 30 h, sauf pour le ciment B qui a lieu après 40 h mais présente un plateau tout à fait horizontal

### Exemple 10 :

Des résultats similaires ont été observés sur des compositions de béton, c'est-à-dire enfermant en outre des granulats dans les propositions indiquées dans le tableau 4 ci-après :

**Tableau 4**

| **Libellé du produit** | **Kg/m³** |
|---|---|
| Sifraco C7 (charge < 80 µm) | 16 |
| Granulats : | |
| 0/0,315 Palvadeau | 189 |
| 0,315/1 Palvadeau | 162 |
| 1/4 Palvadeau | 261 |
| 4/8 Palvadeau | 339 |
| 8/12 Palvadeau | 258 |
| 12/20 Palvadeau | 454 |
| Ciment CEM I 52,5 N | 444 |
| Collaxim L2 (silice) | 15,5 (soit 3,50 %) |
| Collaxim L4 (polysaccharide) | 1,33 (soit 0,30 %) |
| Cimfluid 2002 | 4,44 (soit 1 %) |
| Eau totale | 194 |

Les adjuvants ont été ajoutés lors du malaxage du ciment + charge + granulats avec l'eau.

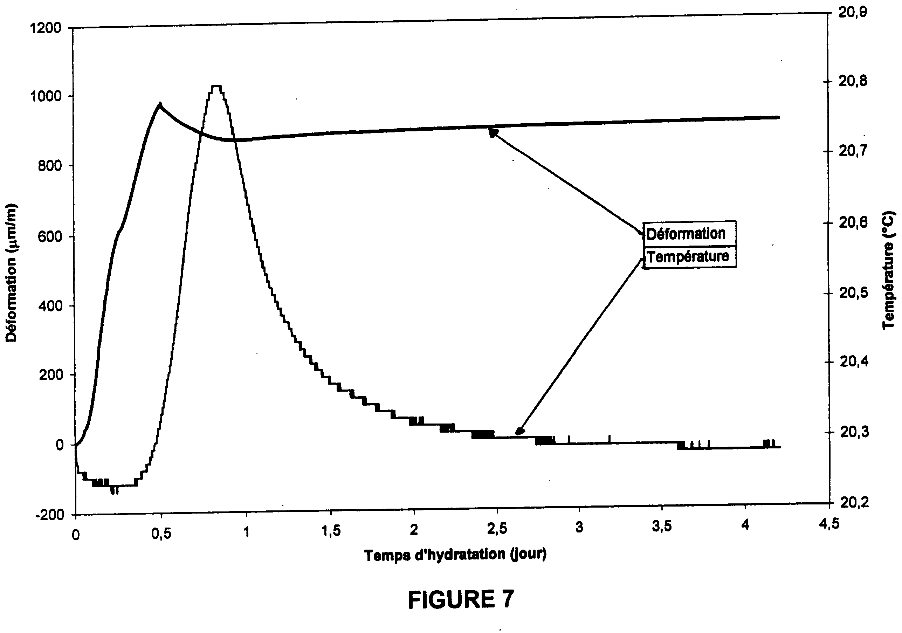

Sur la figure 7 ont été tracées les courbes d'évolution de la déformation du béton et de sa température en fonction du temps d'hydratation.

On constate que le blocage du retrait a lieu au moment de l'élévation de température. La variation n'atteint ensuite pas 40 µm/m dans les trois jours consécutifs (J1 à J4), ce qui est une valeur très faible, comparée aux valeurs de retrait habituellement observées, comprises approximativement entre 300 µm/m et 1000 µm/m, des bétons autonivelants classiques.

## Revendications

1. Composition cimentaire, renfermant du ciment, et un superplastifiant, **caractérisée en ce qu'**elle renferme un agent de blocage du retrait constitué de l'association de silice amorphe à une concentration minimale de 0,35 % en poids et d'au moins un polysaccharide à une concentration comprise entre 0,012 % et 0,050 % en poids d'extrait sec par rapport au ciment.

2. Composition cimentaire selon la revendication 1, **caractérisée en ce que** la concentration en silice est comprise entre 0,4 et 1 % en poids environ par rapport au ciment.

3. Composition cimentaire selon la revendication 1, **caractérisée en ce que** la concentration en silice est comprise entre 0,4 et 0,8 en poids environ par rapport au ciment.

4. Composition cimentaire selon la revendication 1 ou 2, **caractérisée en ce que** la silice est de la silice amorphe, de préférence préparée par un procédé en phase liquide.

5. Composition cimentaire selon l'une quelconque des revendications précédentes, **caractérisée en ce que** la concentration en polysaccharide est comprise entre 0,015 et 0,025 % en poids environ d'extrait sec par rapport au ciment.

6. Composition cimentaire selon l'une quelconque des revendications précédentes, **caractérisée en ce que** le polysaccharide est choisi parmi les celluloses modifiées, l'amidon modifié ou non, les gommes, le caroube, les alginates et plus particulièrement choisi parmi le succinoglycane, la gomme guar, la gomme arabique, la gomme xanthane, la gomme welan, la gomme rhamsan, la gomme gellane ou la carboxyméthylcellulose.

7. Béton ou mortier renfermant des granulats et la composition cimentaire selon l'une quelconque des revendications 1 à 6.

8. Utilisation du mortier ou du béton selon la revendication 7 pour la fabrication de chapes fluides, notamment autonivelantes.

9. Procédé de blocage du retrait d'une composition cimentaire, d'un mortier ou d'un béton, renfermant du ciment et un superplastifiant, **caractérisé en ce qu'**il consiste à ajouter au moment du gâchage de la silice amorphe à une concentration minimale de 0,35 % en poids et d'au moins un polysaccharide à une concentration comprise entre 0,012 % et 0,050 % en poids d'extrait sec par rapport au ciment, permettant d'interrompre la variation de volume de la composition cimentaire durant et après la prise du ciment.

10. Procédé de blocage du retrait selon la revendication 9, **caractérisé en ce que** la concentration en silice est comprise entre 0,4 et 1 % en poids environ par rapport au ciment.

11. Procédé de blocage du retrait selon la revendication 9, **caractérisé en ce que** la concentration en silice est comprise entre 0,4 et 0,8 en poids environ par rapport au ciment.

12. Procédé de blocage du retrait selon l'une des revendications 10 ou 11, **caractérisé en ce que** la concentration en polysaccharide est comprise entre 0,015 et 0,025 % en poids environ d'extrait sec par rapport au ciment.

13. Procédé selon l'une quelconque des revendications 10 à 12, **caractérisé en ce que** la silice est utilisée sous la forme de poudre ou de suspension colloïdale.

14. Procédé selon l'une quelconque des revendications 10 à 13, **caractérisée en ce que** le polysaccharide est introduit sous forme d'une poudre, ou d'une émulsion ou suspension dans l'eau ou l'huile.

## Patentansprüche

1. Zementzusammensetzung, enthaltend Zement und ein Superplastifiziermittel, **dadurch gekennzeichnet, dass** sie ein Antischrumpfmittel enthält, das aus der Kombination von amorphem Siliziumoxid mit einer Mindestkonzentration von 0,35 Gew.-% und mindestens einem Polysaccharid mit einer Konzentration zwischen 0,012 und 0,050 Gew.-% inklusive Trockenextrakt in Bezug zum Zement gebildet ist.

2. Zementzusammensetzung nach Anspruch 1, **dadurch gekennzeichnet, dass** die Siliziumoxidkonzentration zwischen zirka 0,4 und 1 Gew.-% inklusive in Bezug zum Zement beträgt.

3. Zementzusammensetzung nach Anspruch 1, **dadurch gekennzeichnet, dass** die Siliziumoxidkonzentration zwischen zirka 0,4 und 0,8 Gew.-% inklusive in Bezug zum Zement beträgt.

4. Zementzusammensetzung nach Anspruch 1 oder 2, **dadurch gekennzeichnet, dass** das Siliziumoxid amorphes Siliziumoxid ist, das vorzugsweise mit einem Verfahren in flüssiger Phase hergestellt wird.

5. Zementzusammensetzung nach einem der vorangehenden Ansprüche, **dadurch gekennzeichnet, dass** die Polysaccharidkonzentration zwischen zirka 0,015 und 0,025 Gew.-% Trockenextrakt in Bezug zum Zement beträgt.

6. Zementzusammensetzung nach einem der vorangehenden Ansprüche, **dadurch gekennzeichnet, dass** das Polysaccharid aus den modifizierten Zellulosen, der modifizierten oder nicht modifizierten Stärke, den Gummis, dem Johannisbrot, den Alginaten und insbesondere aus dem Succinoglycan, dem Guaran, dem Gummi arabicum, dem Xanthan, dem Welan-Gummi, dem Rhamsan-Gummi, dem Gallan-Gummi oder der Carboxymethylcellulose ausgewählt ist.

7. Beton oder Mörtel, der Granulate und die Zementzusammensetzung nach einem der Ansprüche 1 bis 6 umfasst.

8. Verwendung des Mörtels oder des Betons nach Anspruch 7 für die Herstellung von flüssigen, vor allem selbstausgleichenden Estrichen.

9. Verfahren zur Blockade der Schrumpfung einer Zementzusammensetzung, eines Mörtels oder eines Betons, enthaltend Zement und ein Superplastifiziermittel, **dadurch gekennzeichnet, dass** es darin besteht, im Augenblick des Anrührens amorphes Siliziumoxid in einer Mindestkonzentration von 0,35 Gew.-% und mindestens ein Polysaccharid in einer Konzentration zwischen 0,012 und 0,050 Gew.-% inklusive Trockenextrakt in Bezug zum Zement hinzuzufügen, was erlaubt, die Volumenvariation der Zementzusammensetzung während und nach dem Härten des Zements zu unterbrechen.

10. Verfahren zur Blockade der Schrumpfung nach Anspruch 9, **dadurch gekennzeichnet, dass** die Siliziumoxidkonzentration zwischen zirka 0,4 und 1 Gew.-% inklusive in Bezug zum Zement beträgt.

11. Verfahren zur Blockade der Schrumpfung nach Anspruch 9, **dadurch gekennzeichnet, dass** die Siliziumoxidkonzentration zwischen zirka 0,4 und 0,8 Gew.-% inklusive in Bezug zum Zement beträgt.

12. Verfahren zur Blockade der Schrumpfung nach einem der Ansprüche 10 oder 11, **dadurch gekennzeichnet, dass** die Polysaccharidkonzentration zwischen zirka 0,015 und 0,025 Gew.-% inklusive in Bezug zum Zement beträgt.

13. Verfahren nach einem der Ansprüche 10 bis 12, **dadurch gekennzeichnet, dass** das Siliziumoxid in Form von Pulver oder kolloidaler Suspension verwendet wird.

14. Verfahren nach einem der Ansprüche 10 bis 13, **dadurch gekennzeichnet, dass** das Polysaccharid in Form eines Pulvers oder einer Emulsion oder Suspension in Wasser oder in Öl zugeführt wird.

## Claims

1. A cement composition, containing cement, and a superplasticizer, **characterized in that** it contains an agent for blocking shrinkage consisting of the combination of amorphous silica at a minimum concentration of 0.35% by weight and of at least one polysaccharide at a concentration comprised between 0.012% and 0.050% by weight of dry extract relatively to the cement.

2. The cement composition according to claim 1, **characterized in that** the silica concentration is comprised between about 0.4 and 1% by weight relatively to the cement.

3. The cement composition according to claim 1, **characterized in that** the silica concentration is comprised between about 0.4 and 0.8% by weight relatively to the cement.

4. The cement composition according to claim 1 or 2, **characterized in that** the silica is amorphous silica preferably prepared by a liquid phase method.

5. The cement composition according to any of the preceding claims, **characterized in that** the polysaccharide concentration is comprised between about 0.015 and 0.025% by weight of dry extract relatively to the cement.

6. The cement composition according to any of the preceding claims, **characterized in that** the polysaccharide is selected from among modified celluloses, modified starch or not, gums, carob, alginates and more particularly selected from among succinoglycan, guar gum, gum arabic, xanthan gum, welan gum, Rhamsan gum, gellan gum or carboxymethylcellulose.

7. Concrete or mortar containing granulates and the cement composition according to any of claims 1 to 6.

8. The use of the concrete or the mortar according to claim 7 for making fluid screeds, notably self-leveling screeds.

9. A method for blocking shrinkage of a cement composition, of a mortar or of a concrete, containing cement and a superplasticizer, **characterized in that** it consists of adding at the moment of mixing amorphous silica at a minimum concentration of 0.35% by weight and at least one polysaccharide at a concentration comprised between 0.012% and 0.050% by weight of dry extract relatively to the cement, giving the possibility of interrupting the variation in volume of the cement composition during and after the setting of the cement.

10. The method for blocking shrinkage according to claim 9, **characterized in that** the silica concentration is comprised between about 0.4 and 1% by weight relatively to the cement.

11. The method for blocking shrinkage according to claim 9, **characterized in that** the silica concentration is comprised between about 0.4 and 0.8% by weight relatively to the cement.

12. The method for blocking shrinkage according to one of claims 10 or 11, **characterized in that** the polysaccharide concentration is comprised between 0.015% and 0.025% by weight of dry extract relatively to the cement.

13. The method according to one of claims 10 to 12, **characterized in that** the silica is used as a powder or as a colloidal suspension.

14. The method according to one of claims 10 to 13, **characterized in that** the polysaccharide is introduced as a powder, an emulsion or suspension in water or oil.
